# EUROPEAN PATENT APPLICATION

(11) **EP 2 305 997 A2**
(43) Date of publication of application: **06.04.2011**
(21) Application number: 10179500.3
(22) Date of filing: 24.09.2010
(51) Int. Cl.: F03D 1/00, F03D 9/00

(54) **Electricity generation**

(30) Priority: 28.09.2009 GB 0916959
(71) Applicant: UK Wind Energy Limited, Bridgend Business Centre Bridgend Bridgend CF31 3XJ (GB)
(72) Inventor: Williams, Gerwyn, Bridgend CF31 3XJ (GB)
(74) Representative: Davies, Gregory Mark

(57) **Abstract**

A renewable energy source causes movement of a conductor arrangement within a magnetic field set up by the flow of electricity along an electricity transmission line. The energy generation apparatus comprises a generation conductor arrangement in which an electric current is induced, a rotor for mounting the generation conductor arrangement and mounting means for mounting the rotor enabling the generation conductor to be positioned within the magnetic field set up by the flow of electricity along an electricity transmission line.

## Description

This invention relates generally to electricity generation.

Electricity is generally distributed globally either by underground cables, surface cables or overhead lines mounted on steel or wooden supporting structures, whereby the steel structures are commonly known as electricity pylons. The electricity may be distributed using direct current of alternating current techniques and can be at varying voltages. Three-phase electric power systems are used for high and extra-high voltage AC transmission lines (generally 50 kV and above). Therefore the electricity pylons are designed to carry three (or multiples of three) conductors. The current in each phase differs by a third of a cycle i.e. is displaced by an angle of 120 degrees and the delay between the phases has the effect of giving constant power transfer over each cycle of the current. Usually at least one earth conductor (or ground conductor) for lightning protection is mounted at the top of the tower.

A disadvantage with this set up is that as electrical energy is transported along the electricity conductor, some of the energy is lost since magnetic field lines extend beyond the surface of the conductor. This wasted energy represents the transmission loss of the transported electrical energy. Also huge structures have been erected solely for supporting the electricity conductors.

Therefore, the structure of the electricity pylon has been used to support wind turbines transforming the electricity pylon into an energy generator, rather than merely an energy transporter.

In GB 2407135 it is discussed how wind turbines may be mounted on the existing structure of an electricity pylon to permit rotation of the turbine about the vertical axis of the pylon. In GB 2407135 the wind turbine comprises a turntable permitted to turn in the wind formed from vertical vanes arranged between a top and foot mount. Gears are located at the foot mount for turning the core of the dynamo/generator. The generators, which are placed around the turntable at the ground level, and therefore away from the electricity conductors, produce an alternative electricity source that is fed into the cables carried by the pylon, or fed to an area in the vicinity of the pylon. Beneficially, the vanes which are mounted inside existing electrical pylons prohibit the need for construction of standard and highly contested wind turbine sights, and utilises an existing and accepted steel lattice structure.

In GB 242515 a wind turbine comprises at least one wind driven rotor coupled to an electrical generator and supported by a lattice tower, for instance an electricity pylon. The wind turbine comprises a rotor, the axis of which is aligned with the longitudinal axis of the electricity pylon. The rotor may be mounted externally to or internally to the pylon. Several rotors may be provided capable of being independently rotated and coupled with a separate generator. GB242515 describes a wind energy collection unit having a fan and an electricity generator coupled to the fan via a suitable shaft, whereby the generator is configured to generate electricity in response to rotation of the fan by the wind. The electricity generator unit comprises the generator unit, current regulator, electricity grid interface unit and cooling unit according to known electricity generator applications.

In accordance with a first aspect of the present invention, there is provided a method of generating electricity using a renewable energy source to effect movement of a conductor arrangement within a magnetic field set up by flow of electricity along an electricity transmission line.

In the electricity generation systems described in GB 2407135 and GB242515, although the electrical energy generated by the wind turbine provides an electrical energy source that can be thought of as compensation for the transmission energy loss associated with transporting electricity along a cable, there is no discussion of harnessing the wasted energy into useful energy. This oversight is addressed in accordance with the present invention. The prior art does not suggest other than to use standard type generators having standard type coil and magnet arrangements.

Preferably, in accordance with a preferred realisation of the invention the renewable energy source is provided by the wind.

The conductor arrangement is rotated within the magnetic field set up by the electricity flowing in the transmission line.

Desirably, the electricity transmission line is supported by an electricity pylon or other tower structure.

In accordance with another aspect of the present invention, there is provided Electricity generation apparatus comprising:
a generation conductor arrangement in which an electric current is induced;
a rotor for mounting the generation conductor arrangement;
and mounting means for mounting the rotor such that the generation conductor is positioned within the magnetic field set up by flow of electricity along an electricity transmission line.

Preferably, the generation conductor is moved in respect to a magnetic field such that the current is induced.

Beneficially, the apparatus further comprises a drive arrangement to drive the rotor to rotate the generation conductor.

In a preferred embodiment, the drive arrangement is actuated by a renewable energy source. In a preferred realisation the drive arrangement may be wind driven by a wind turbine.

Desirably, the electricity transmission line is an electricity conductor line supported by an electricity pylon.

Preferably, the generation conductor arrangement comprises a coil which may beneficially is mounted to the rotor. The rotor may be mounted to a rotatable shaft. Where the rotor is driven by a wind turbine, the wind turbine may be mounted to the rotatable shaft. The rotor axis may be positioned substantially vertically or upright.

Beneficially, the wind turbine comprises at least one vane. The at least one vane may extend along the vertical length of the shaft so as to maximise surface area and energy applied by the wind. On application of a prevailing wind to the surface of the at least one vane the net force applied to the wind turbine causes the wind turbine to rotate about the longitudinal axis of the shaft. The rotation of the wind turbine causes the shaft to rotate and the rotation of the shaft causes the rotor to rotate.

In a preferred embodiment, the induced electric current is transferred to an electricity adapter unit so as to provide electricity suitable for transmission/utilisation and the adapted electricity is transferred to an electricity transportation means.

In one embodiment of the invention, the induced electric current is utilised as an alternative power source. Alternatively, the induced electric current is utilised to boost energy transmission of the electricity pylon system.

In one embodiment it is preferred that the electricity generating apparatus is mounted to the electricity pylon within the central cavity of the electricity pylon.

In accordance with a further aspect, the invention provides an electricity generation system comprising:
an electricity transmission line;
a generation conductor arrangement in which an electric current is induced;
a rotor for mounting the generation conductor arrangement;
and mounting means for mounting the rotor such that the generation conductor is positioned within the magnetic field set up by flow of electricity along the electricity transmission line.

These and other aspects of the invention will be apparent from, and elucidated with reference to, the embodiment as described herein.

An embodiment of the present invention will now be described, by way of example only and with reference to the accompanying drawings, in which:
Figure 1 is a block diagram showing an electricity pylon comprising electricity generating apparatus according to the invention;

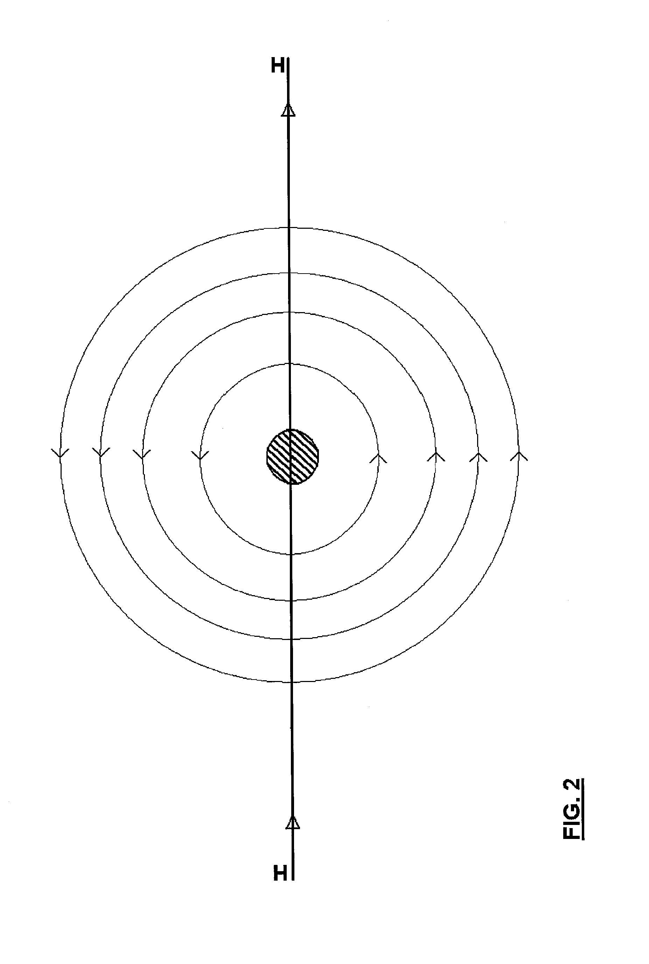

Figure 2 is a representation of the magnetic field around a wire carrying a current.

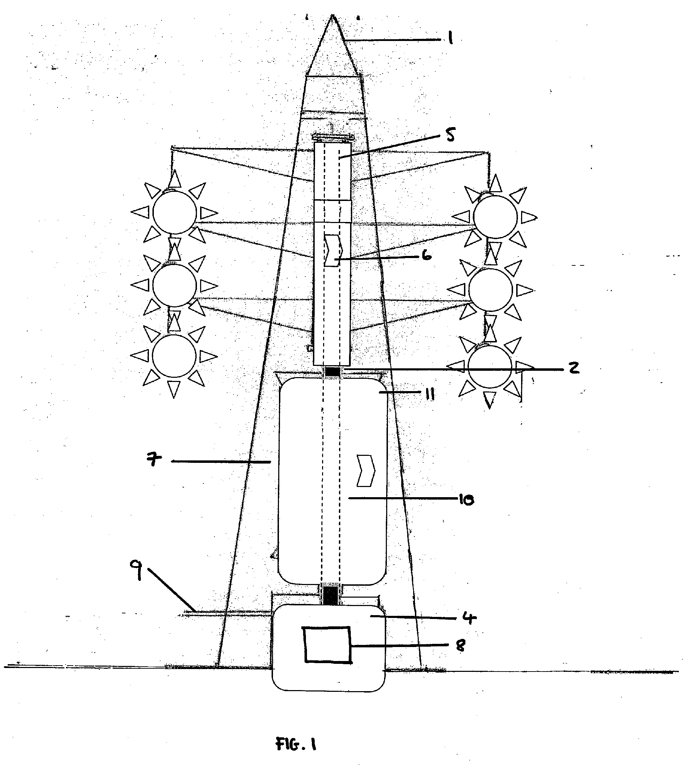

Referring initially to figure 1, there is shown a first embodiment of the invention, wherein a central hollow shaft 2 is arranged along the longitudinal axis of an electricity pylon 1, extending from a position above the upper most overhead electricity lines 3 to the base of the electricity Pylon positioned at ground level. The shaft is rotatable and is mounted on the pylon such that it extends into a base structure 4 located on the ground. In this embodiment the shaft and base structure are positioned within the main body of the central cavity 6 of the electricity pylon, although in further embodiments the shaft may be positioned externally to the structure and may not extend along a substantial part of the structure.

An electricity generation rotor 5 is arranged along the shaft 2 via a system of bearings. Ideally, it is positioned such that the electricity generation rotor 5 is aligned with the electricity lines. Therefore, the first end of the electricity generation rotor 5 does not extend substantially higher than the upper most electricity line 3a and the second end of the electricity generation rotor 5 does not extend substantially lower than the lower most electricity line 3b. This arrangement enables the rotor 5 to be within the vicinity of the magnetic fields that exist around the electricity lines 3 as they transport electricity. Wire coils 6 are attached to the rotor 5 and the outputs are fed through the hollow shaft 2 to the base structure 4 where there are positioned SLIP rings (not shown) for permitting the transfer of electricity from wires attached to the rotating shaft 2 to wires attached in the stationary base structure.

Within the base structure 4 there is arranged an electricity adapter unit 8. The electrical voltage is passed through conditioning circuitry, protection circuitry and transformation equipment which are arranged to collect and distribute the resultant electro-motive force. The electricity adapter unit is connected to the coils positioned on the electricity generation rotor via a system of electrical conductors and converts the electrical energy generated to a suitably conditioned AC or DC electrical format ready for transmission and utilisation. The resulting adapted electricity is then fed to a transmission means, e.g. a cable 9, for use.

A wind turbine 10 is fixably mounted along the shaft 2 between the second end of the electricity generator rotor and the base structure. In the embodiment presented here the turbine 10 has multiple vanes 11 extending radially outwards from the shaft. The vanes 11 extend the length of the shaft between the electricity generation rotor and the base structure. The length of the vane is such that the vane is permitted to rotate about the longitudinal (vertical) axis of the electricity pylon without coming into contact with the electricity generating rotor 5 or the base structure 4, since any friction effect would result in energy losses. By extending the length of the vanes along the shaft the surface area of a vane face may be maximised so as to increase the energy applied to the vane by the prevailing wind. The size and type of vane 11 may vary and a gear system may be included for transferring the rotational motion of a wind turbine rotating about an axis perpendicular to the vertical axis of the electricity pylon to a rotating force about the vertical axis of the electricity pylon, so that it may be applied to the preferred arrangement of the shaft.

In use, a prevailing wind causes rotation of the wind turbine 10 which results in rotation of the shaft 2. Since the rotor 5 is fixably mounted to the shaft it is also caused to rotate, along with the wire coils 6 that are affixed to the rotor. Therefore, the wind turbine 10 converts wind energy, which is a renewable energy source, to mechanical energy (i.e. in this instance a rotational force).

The wire coil arrangement 6 is caused to rotate and as a result the arrangement crosses the lines of flux generated by the electricity lines of the pylon as they transport electricity. Therefore, current is induced in the coil arrangement. Therefore, the mechanical energy provided by the wind turbine 10 is converted into electrical energy. The voltage that is generated in the wire is connected via slip rings (not shown) housed in the base structure to an electricity adapter device, where the electricity is reformatted ready for transmission. The voltage is then connected to a transmission cable 9 where the voltage can be transferred to a local load, or connected in parallel with the next pylon. Therefore, the induced electricity can either be used to boost the transmission voltage on individual pylons, thereby minimising electricity transmission losses, or to generate a supply of electricity for local use (i.e. as an energy source). This process can be repeated for a length of overhead line, thereby increasing capacity.

To generate electrical energy the arrangement utilises magnetic fields surrounding electricity transmission systems. It is noted that this magnetic field is wasted energy and represents losses in electricity transmission. Therefore, although electricity is provided by induction, it is emphasised that a standard generator is not implemented in the invention. The electricity that is generated uses free wind energy and free latent energy (i.e. the magnetic field lines of the energy transportation means). Therefore, by using a renewable energy source and a waste product from existing electricity transmission systems the invention generates free electricity.

In the preferred embodiment a rotational motion is applied to the coil arrangement 6, however in an alternative embodiment the movement of the coil could be along a reciprocating linear path, or may follow a simple harmonic motion, for example a pendulum arrangement whereby the coil is caused to swing. It is noted however, that the alternative arrangements provide practical limitations. It is noted that the electricity transportation means is fixed and therefore so to are the magnetic field lines, however it is also noted that the same magnetic induction effect would be provided in the case where the magnetic source is moved with respect to a stationary coil.

In a further embodiment the wind power may be substituted for an alternative renewable energy source for example solar panels, tidal energy or geothermal heat.

The electricity generation apparatus utilises wind power in conjunction with existing high intensity magnetic fields (latent Energy) that surround the conductors of high voltage overhead lines used to distribute electricity throughout the world. Therefore, existing strategically placed structures that already form part of an electricity distribution system are utilised in generating electricity.

In the preferred embodiment the invention is mounted within the steel pylon, however alternative mounting arrangements may be implemented e.g. mounting the structure a wooden pole.

In an alternative embodiment the structure may be mounted onto the exterior of the pylon or on a wooden pole.

Advantages include that the electricity generation apparatus offers financial and environmental benefits since the waste product, i.e. losses in the form of magnetic fields around conductors are implemented to generate a useful form of energy. Therefore, free electricity is generated that can be used as a separate electrical energy source, or to boost the transmission voltage on individual electricity pylons, thereby minimising transmission losses associated with electricity transmission lines. Further, the main civil engineering works are complete and the visual impact of the electricity generation apparatus is accepted since the apparatus is applied to existing systems.

It should be noted that the above-mentioned embodiment illustrates rather than limits the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of hardware. The mere fact that certain measures are recited in mutually different dependent claims does not indicate that a combination of these measures cannot be used to advantage.

## Claims

1. Electricity generation apparatus comprising:
a generation conductor arrangement in which an electric current is induced;
a rotor for mounting the generation conductor arrangement;
and mounting means for mounting the rotor such that the generation conductor is positioned within the magnetic field set up by flow of electricity along an electricity transmission line.

2. Electricity generation apparatus according to claim 1, wherein:
i) the generation conductor is moved with respect to the magnetic field such that the current is induced; and/or
ii) a drive arrangement is provided to drive the rotor to rotate the generation conductor.

3. Electricity generation apparatus according to claim 2, wherein:
i) the drive arrangement is actuated by a renewable energy source; and/or
ii) the drive arrangement is wind driven; and/or
iii) the drive arrangement is a wind turbine.

4. Electricity generation apparatus according to any preceding claim, wherein:
i) the generation conductor is rotated within the magnetic field set up by flow of electricity along the electricity transmission line; and/or
ii) the electricity transmission line is supported by an electricity pylon or other tower structure; and/or
iii) the generation conductor arrangement comprises a coil (preferably wherein the coil is mounted to the rotor).

5. Electricity generation apparatus according to any preceding claim, wherein:
i) the rotor is mounted to a rotatable shaft; and/or
ii) the rotor is mounted with its axis orientated upright.

6. Electricity generation apparatus according to any preceding claim, wherein:
i) the rotor is driven by a wind turbine and the wind turbine comprises at least one vane, preferably wherein the at least one vane extends along the vertical length of the shaft; and/or wherein on application of a prevailing wind to the surface of the at least one vane the net force applied to the wind turbine causes the wind turbine to rotate; and/or
ii) the rotor is driven by a wind turbine and the rotation of the wind turbine is about the longitudinal axis of the shaft.

7. Electricity generation apparatus according to any preceding claim, wherein:
i) the induced electric current is transferred to an electricity adapter unit so as to provide electricity suitable for transmission/utilisation; and/or
ii) the adapted electricity is transferred to an electricity transportation means.

8. Electricity generation apparatus according to any preceding claim, wherein:
i) the induced electric current is utilised as an alternative power source; and/or
ii) the induced electric current is utilised to boost energy transmission of the electricity pylon system.

9. Electricity generation apparatus according to any of claims 5 to 26, wherein the electricity generating apparatus is mounted to an electricity pylon or other structure supporting the transmission line, optionally wherein the electricity generating apparatus is mounted in the perimeter, central cavity or frame of the electricity pylon or other structure supporting the transmission line.

10. An electricity generation system comprising:
an electricity transmission line;
a generation conductor arrangement in which an electric current is induced;
a rotor for mounting the generation conductor arrangement;
and mounting means for mounting the rotor such that the generation conductor is positioned within the magnetic field set up by flow of electricity along the electricity transmission line.

11. A method of generating electricity using a renewable energy source to effect movement of a conductor arrangement within a magnetic field set up by flow of electricity along an electricity transmission line.

12. A method according to claim 11, wherein the renewable energy source is provided by the wind.

13. A method according to claim 11 or claim 12, wherein the conductor arrangement is rotated within the magnetic field set up by flow of electricity along the electricity transmission line.

14. A method according to any of claims 11 to 13, wherein the electricity transmission line is supported by an electricity pylon or other tower structure.
